# EUROPEAN PATENT SPECIFICATION

(11) **EP 1 894 700 B1**
(45) Date of publication and mention of the grant of the patent: **23.11.2016**
(21) Application number: 06766959.8
(22) Date of filing: 20.06.2006
(51) Int. Cl.: B29C 45/66, B22D 17/26, B22D 17/32, B29C 45/76

(54) **MOLD CLAMPING FORCE DETECTION METHOD**
FORMKLEMMKRAFTDETEKTIONSVERFAHREN
PROCÉDÉ DE DÉTECTION DE FORCE DE SERRAGE DE MOULE

(30) Priority: 21.06.2005 JP 2005180999; 23.01.2006 JP 2006014312
(43) Date of publication of application: 05.03.2008
(73) Proprietor: SUMITOMO HEAVY INDUSTRIES, LTD., Shinagawa-ku, Tokyo 141-8686 (JP)
(72) Inventor: ITOH, Akira, Chiba-shi, Chiba 2630001 (JP)
(74) Representative: Wagner, Karl H.
(86) International application number: PCT/JP2006/312298
(87) International publication number: WO 2006/137386

(56) References cited:
- JP-A- 08 086 706
- JP-A- 08 290 437
- JP-A- 2000 190 369
- JP-A- 2003 224 156

## Description

### TECHNICAL FIELD

The present invention relates to mold-clamping force detection methods and, more particularly, to a mold-clamping force detection method that detects a mold-clamping force using a strain gauge which measures a strain of a tie bar of a mold-clamping apparatus of a molding machine.

### BACKGROUND ART

For example, as means for detecting a mold-clamping force in a mold of an injection molding machine, there is suggested a method of measuring a strain (elongation) of a tie bar of a mold-clamping apparatus and converting the measured strain into a mold-clamping force. A tensile stress proportional to a mold-clamping force is generated in a tie bar. The mold-clamping force actually applied to the mold can be acquired by detecting the strain (elongation) of the tie bar generated by the tensile stress.

Generally, a strain gauge is used as means for detecting a strain of a rod-like member such as a tie bar (for example, refer to Patent Document 1). A strain gauge is constituted by a bridge circuit consisting of a plurality of resistors. At least one of the resistors is attached to an object to be measured (tie bar) so as to be distorted together with the object to be measured. The strain gauge is a strain detection apparatus which measures a strain based on a change in an output voltage caused by a change in a resistance corresponding to such a strain.

JP 2000-190369 A discloses a motor-driven resin molding machine and its control method in which molding having excellent molding precision is performed by controlling variations of mold clamping force due to repeat of mold-setting operation. The upper platen is fixed and the lower platen is driven by a double toggle mechanism. Stroke from the touch position of a mold to the lockup position is calculated on the basis of detection value of the touch position of the mold. Driving of the lower platen is controlled by a controlling device. Further, the lockup position can be revised by detection of mold clamping force by a strain sensor.

JP 08-290437 A discloses a press molding apparatus capable of certainly detecting the accurate clamping force of a mold. A voltage applying means applying voltage across two predetermined points of a tie bar generating strain when molds are clamped to generate a current, and a mold clamping force detection means detecting the mold clamping force between the molds on the basis of the change of the current value generated between two predetermined points of the tie bar by the voltage applying means caused by the strain at the time of mold clamping are provided. Since the tie bar is utilized in place of a strain gauge, trouble is hard to generate and accurate mold clamping force can be certainly detected.

JP 08-086706 A discloses that in order to prevent an accident caused by abnormality of a sensor in a molding machine having a function to automatically correct die clamping force, a toggle mechanism is adopted as a die clamping mechanism, and elongation of a tie bar when the toggle mechanism elongates and performs die clamping is detected by a tie bar sensor, and operation is performed on output from the tie bar sensor, and operation is performed on die clamping force generated in the tie bar, and it is compared with prestored reference die clamping force, and the die clamping mechanism is controlled so that operation die clamping force coincides with the reference die clamping force. When the operation die clamping force by performing operation on data from the tie bar sensor becomes a value or more by multiplying a proper die clamping upper limit value set above the reference die clamping force by a factor not less than 1, or when it becomes a value or less by dividing a proper die clamping lower limit value set under the reference die clamping force by a factor not less than 1, it is judged as abnormality of the sensor, and die clamping control is stopped.

JP 2003-224156 A discloses a semiconductor resin sealing device which has a clamping force of high accuracy and/or controls a position of a metal mold with high accuracy. A device comprises a pair of metal molds for sealing a semiconductor chip with resin by placing the semiconductor chip in a cavity and injecting the resin into the cavity while clamping, a servo motor that drives the clamping/opening operation of the metal mold, a controller that controls a motor, an encoder that detects the rotation angle of the motor, and a load cell that detects the clamping force of the metal mold. The controller compares/calculates a detected value of the load cell and a target clamping force during the clamping operation, and then controls the motor based on the result of the calculation, and then, in a region for an operation other then the clamping operation, controls the motor based on a detected value of the encoder. While die-opening, the position of the metal mold is controlled while the semiconductor chip, etc., is taken in/out of a region between a pair of metal molds. A relative position of the metal mold for the position of a transport mechanism is specified with a high degree of accuracy, so that taking in/out is surely performed.

### DISCLOSURE OF THE INVENTION

### PROBLEMS TO BE SOLVED BY THE INVENTION

In a strain detection apparatus using a strain gauge, a drift occurs in an output voltage from the strain detection apparatus due to aging of a resistor attached to an object to be measured or aging of an attaching means. If the drift occurs in the output voltage, an error occurs in a clamping force acquired by conversion of the output voltage. With the strain detection apparatus for detecting a mold-clamping force of a conventional injection molding machine, there has been taken no measures for the detection error of a mold-clamping force due to the drift in the output voltage since less accuracy has been required in detecting a mold-clamping force.

However, with progress in an injection molding technology, a demand for improving a quality of a mold product by detecting a mold-clamping force precisely and reflecting it in molding conditions has been increasing. In order to detect a mold-clamping force with a sufficient accuracy, it is necessary to correct a drift in an output voltage due to the above-mentioned aging.

### MEANS FOR SOLVING PROBLEMS

It is a general object of the present invention to provide an improved and useful mold-clamping force detection method in which the above-mentioned problems are eliminated.

A more specific object of the present invention is to provide a mold-clamping force detection method which can detect a mold-clamping force with good accuracy by correcting a drift in an output from a strain detection apparatus due to aging.

In order to achieve the above-mentioned objects, there is provided according to the present invention a mold-clamping force detection method for detecting a mold-clamping force based on an output from at least one strain detection apparatus provided to a mold-clamping apparatus of a molding machine, as set forth in claim 1.

In the above-mentioned invention, a plurality of the strain detection apparatuses may be provided to the mold-clamping force of the molding machine, and acquiring the second output value from the first output value output from each of the strain detection apparatuses, and acquiring the mold-clamping force based on a sum of the second output values.

In the above-mentioned mold-clamping force detection method, it is preferable to detect the first output value when the mold-clamping apparatus is in a maximum mold-open state. Additionally, the correction of the output value may be performed using a digital value which is an output from the strain detection apparatus being converted into a digital value.

Additionally, in the above-mentioned mold-clamping force detection method, an output voltage of the comparison amplifier circuit may be converted into a digital value and retained so as to generate the reference voltage by converting the digital value into an analog value. It is preferable that the comparison amplifier circuit includes at least two comparison amplifiers connected in series.

Further, in the above-mentioned mold-clamping force detection method, a comparison may be made between output values based on at least two of the strain detection apparatuses so as to determine an abnormality when a result of the comparison is greater than a predetermined value.

### EFFECT OF THE INVENTION

According to the present invention, since a changed part of the output caused by aging of the strain detection apparatus is reflected in the output, the drift in the output due to the aging of the strain detection apparatus is corrected and an actual strain can be detected accurately. Thereby, a mold-clamping force of a mold of an injection molding machine can be detected accurately, and an optimum molding condition can be set efficiently based on the accurate detection value of the mold-clamping force.

Other objects, features and advantages of the present invention will become more apparent from the following detailed description when read in conjunction with the accompanying drawings.

### BRIEF DESCRIPTION OF DRAWINGS

[FIG. 1] is a side view of a mold-clamping apparatus of an injection molding machine to which a strain detection method according to the present invention is applied.
[FIG. 2] is a flowchart of a process of correcting a voltage drift in a clamping force detection method according to the present invention.
[FIG. 3] is a block circuit diagram of a strain detection apparatus constituted to perform a soft reset.
[FIG. 4] is a block circuit diagram of a strain detection apparatus constituted to perform a hard reset.
[FIG. 5] is a circuit diagram of a specific example of a strain detection apparatus configured to perform a hard reset.
[FIG. 6] is an illustration showing a case where a strain detection apparatus is provided to each of two tie bars on a diagonal line from among four tie bars.
[FIG. 7] is an illustration showing a case where a strain detection apparatus is provided to each of four tie bars.

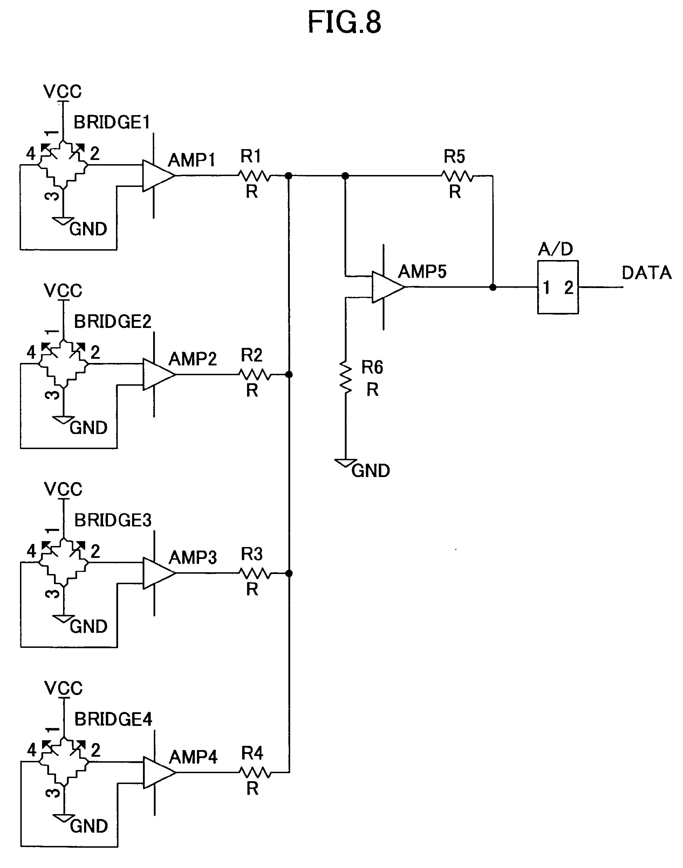

[FIG. 8] is a block circuit diagram showing an example of acquiring a mold-clamping force based on a sum of analog outputs from strain detection apparatuses provided to four tie bars.
[FIG. 9] is a block circuit diagram showing an example of acquiring a mold-clamping force based on a sum of digital outputs from strain detection apparatuses provided to four tie bars.
[FIG. 10] is a block circuit diagram showing an example of acquiring a mold-clamping force based on a sum of analog outputs by outputting the analog outputs from strain detection apparatuses provided to four tie bars through a multiplexer and performing a digital conversion thereon.
[FIG. 11] is a block circuit diagram of an example in which a structure of the soft reset shown in FIG. 3 is applied to a structure in which a strain detection apparatus is provided to each of four tie bars.
[FIG. 12] is a block circuit diagram of an example in which a structure of the hard reset shown in FIG. 5 is applied to a structure in which a strain detection apparatus is provided to each of four tie bars.
[FIG. 13] is an illustration showing as a third output value a difference between detection values detected by two strain detection apparatuses attached to tie bars on a diagonal line.

### EXPLANATION OF REFERENCE SIGNS

- 20: mold-clamping mechanism
- 21: stationary platen
- 22: tie bar
- 23: movable platen
- 30: strain detection apparatus
- 40: control apparatus
- 50: stain gauge
- 60: digital processing part
- 62: analog/digital conversion circuit
- 64: reset processing circuit
- 70: correction circuit
- 72: output voltage detection circuit
- 74: reference voltage generation circuit

### BEST MODE FOR CARRYING OUT THE INVENTION

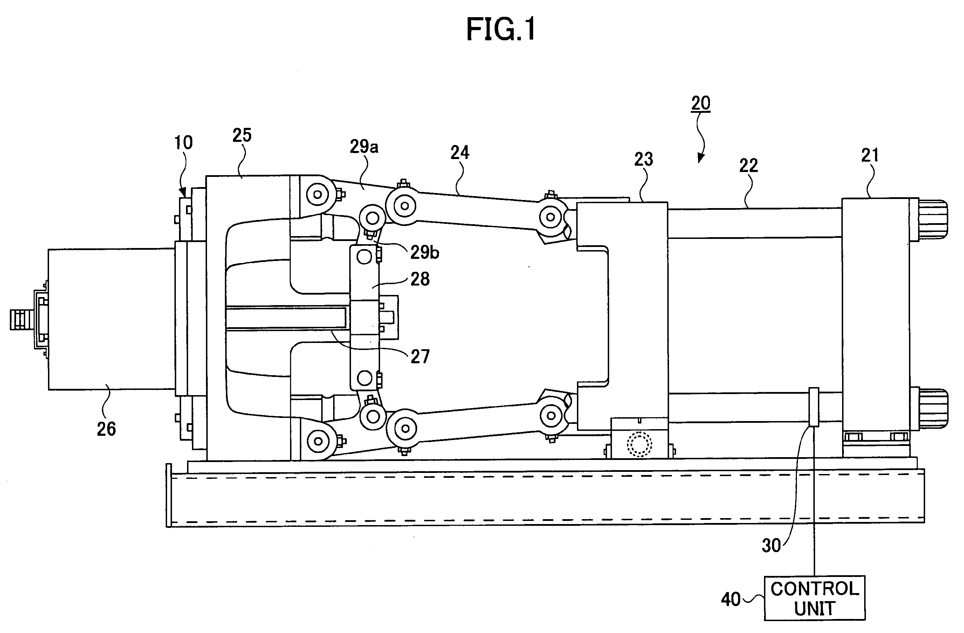

A description will be given briefly below, with reference to FIG. 1, of a mold-clamping apparatus of an injection molding machine as an apparatus to which a strain detection apparatus according to the present invention is applicable.

FIG. 1 is a side view of a mold-clamping apparatus of an injection molding machine to which a strain detection apparatus according to the present invention is attached. The mold-clamping apparatus shown in FIG. 1 comprises a mold thickness adjustment apparatus 10 and a mold-clamping mechanism 20. The mold-clamping mechanism 20 is a toggle type mold-clamping mechanism, which comprises a stationary platen 21, tie bars 22, a movable platen 23, an arm 24, a toggle support 25, a servo motor 26 for mold-clamping, a ball screw 27 and a crosshead 28.

A stationary mold (not shown in the figure) is attached to the stationary platen 21, and a movable mold (not shown in the figure) is attached to the movable platen 23. Opening and closing operation and mold-clamping operation of the mold is performed by moving the movable mold with respect to the stationary mold by moving the movable platen 23 along the tie bars 22.

In the mold-clamping mechanism 20, a rotational motion of the servo motor 26 is converted into a linear motion by the ball screw 27 and is transmitted to a toggle mechanism (consisting of the crosshead 28, a toggle levers 29a and 29b and the arm 24) connected to the ball screw 27. The toggle mechanism is connected to the movable platen 23 so that the movable platen 23 is moved forward and backward by the linear motion of the toggle mechanism.

When the movable platen 23 moves forward and the movable mold touches the stationary mold (mold close) and the movable platen 23 is pressed further against the stationary mold, the tie bars 22 are stretched by the pressing force and an elongation is generated, which results in generation of a mold-clamping force proportional to the elongation of the tie bars 22.

Accordingly, when a mold-clamping force is generated by the mold-clamping mechanism 20, the mold-clamping force actually applied to the stationary mold and the movable mold can be detected by detecting a strain (elongation) generated in the tie bars 22. Thus, in the mold-clamping apparatus shown in FIG. 1, a strain detection apparatus 30 as a mold-clamping force detection apparatus is provided to one of the tie bars 22 so as to detect a mold-clamping force by an output of the strain detection apparatus 30.

The strain detection apparatus 30 detects an elongation of the tie bar 22 using a strain gauge. The strain gauge is applied to the tie bar 22, or attached to the tie bar 22 by being pressed against the tie bar 22 by a fixing jig so as to be elongated and contacted together with the tie bar 22. The strain gauge comprises resistance wires, and is configured to detect elongation and contraction based on an output voltage caused by a change in the resistance value due to the elongation and contraction of the resistance wire when a voltage is applied to the strain gauge.

The output voltage from the strain detection apparatus 30 (strain gauge) is supplied to a control unit 40 provided, for example, in the injection molding machine. The control unit 40 converts the output voltage supplied from the strain detection apparatus 30 (strain gauge) so as to acquire a mold-clamping force. The acquired mold-clamping force is used for checking or setting molding conditions.

The strain gauge used in the above-mentioned strain detection apparatus 30 is a detection circuit that detects a change in a resistance value using a known bridge circuit. The strain gauge forms a bridge circuit by a combination with a plurality of resistance wires so as to amplify a difference between an output voltage from a predetermined position of the bridge circuit and a reference voltage and output as a voltage signal. Usually, the circuit is configured so that the reference voltage is a ground potential (0 volt). When there is no change in each resistance wire (that is, there is no change in the resistance value), the bridge circuit is configured output 0 volt. Then, when there is a change in one or two of the resistance wires (that is, the resistance value changes due to the resistance wires being elongated or contracted), the resistance values in the bridge circuit are off-balance and it is configured so that a voltage proportional to the change in the resistance values is output.

In a case of a long-term use, the resistance values of the resistance wires constituting the bridge circuit change although they are small. If there is such a change in the resistance values due to such aging, the output voltage form the bridge circuit, which has been set to 0 volt, becomes not equal to 0 volt, and a voltage (for example, 10 millivolts) proportional to the change in the resistance values due to the aging is output. The change in the output voltage is referred to as a drift. That is, although the output voltage is set to 0 volt initially in a state where no strain is generated in the tie bar (when there is no load), the output voltage may be drifted when a certain time has passed and becomes equal to 10 millivolts. Thus, a voltage that is a result that 10 millivolts is always added to the voltage generated due to an actual strain (elongation) of the tie bar is output.

The strain (elongation) of the tie bar is a value acquired by converting the output voltage, and is turn to a different value from an actual strain (elongation) by a voltage drift, which results in generation of an error in detection of a strain.

Thus, in the mold-clamping force detection method according to the present invention, a correction is made by canceling a voltage value corresponding to a drift by subtracting the above-mentioned drift in the output voltage at no load from an actual output voltage value. This correction includes a soft reset and a hard reset.

The soft reset is a correction method in which an analog/digital conversion circuit, which converts an output voltage output from the bridge circuit through an amplifier (AMP) so as to perform the cancellation by adding or subtracting a digital value corresponding to a voltage drift to or from a digital value of an output voltage acquired by the digital conversion. The soft reset is a method of correction by processing data representing the output voltage according to software.

On the other hand, the hard reset is a correction method in which a circuit for changing a reference voltage supplied to a comparison amplifier generating the output voltage by a part corresponding to the drift voltage so as to cancel the voltage drift according to hardware (circuit).

The present invention aims to eliminate influences of the voltage drift, and the above-mentioned soft reset and hard reset are examples thereof and either one can be used, and variations and modifications may be made within the scope of the present invention.

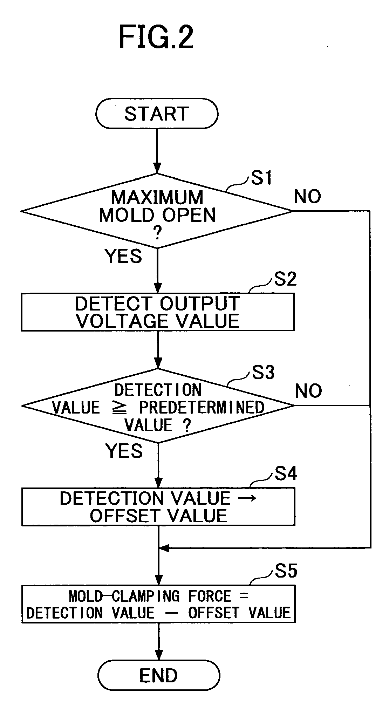

Here, a description will be given, with reference to FIG. 2, of a method of correcting a voltage drift in the mold-clamping force detection method according to the present invention. It should be noted that this correction is supposed to be performed on the mold-clamping apparatus shown in FIG. 1.

First, in step S1, an operating state of the mold-clamping apparatus is checked so as to determine whether or not the movable mold is at the maximum mold-open position. The maximum mold-open position is a position where the movable mold is farthest from the stationary mold, that is, a position where the movable platen 23 is moved backward at maximum and stopped. There is no clamping-force generated at the maximum mold-open position, and there is no strain (elongation) generated in the tie bars 22.

If the movable platen 23 is at the maximum mold-open position, the process proceeds to step S2 to detect an output voltage from the strain detection apparatus 30. Since the movable mold is stopped at the maximum mold-open position, under normal circumstances, the output voltage of the strain detection apparatus 30 is 0 volt and the detection value is 0. However, if there is a change with age in the strain detection apparatus 30, a drift is generated and the output voltage is not equal to 0 volt. Thus, also the detection value is not zero. Here, the detection value is a digitized output voltage value in the above-mentioned soft reset, and means a value of the output voltage output from the comparison amplifier in the hard reset.

Next, in step S3, it is determined whether or not the detection value is equal to or greater than a predetermined value. When the detection value is equal to or greater than the predetermined value, it proceeds to step S4 to set the detection value as an offset value. The predetermined value is a threshold value for judging whether or not it is necessary to correct the detection error due to the drift. That is, in the case where the detection value is equal to or greater than the predetermined value, it is assumed that the detection error is not at a negligible degree, and setting is made so that a value which is obtained by subtracting the offset value from the detection value is set to a value for converting into a mold-clamping force. That is, the mold-clamping force is calculated based on a value, which is obtained by subtracting the offset value from the detection value at the time of mold-clamping, in the process of actually detecting the mold-clamping force after the correction process. It should be noted that the initial value of the offset value is set to 0.

As mentioned above, the detection value at the time of mold-clamping is a digital value of the output voltage in the soft reset, and the offset value is a digital value of the drift voltage at the maximum mold-open position. On the other hand, in the hard reset, the detection value at the time of mold-clamping is the output voltage of the strain gauge itself, and the offset value is the drift voltage itself.

If the setting to set the value obtained by subtracting the offset value from the detection value is completed in step S5, the process at this time is ended. Additionally, if it is judged in step S1 that the movable mold is not at the maximum mold-open position and if it is determined in step S3 that the detection value is not equal to or greater than the predetermined value, the correction in step S4 is not performed, and the process is ended after proceeding to step S5.

It should be noted that although it is caused to perform the correction when the movable platen 23 is at the maximum mold-open position in the above-mentioned process, it is not limited to this, and may be a position where there are no mold-closing force and no mold-clamping force generated (that is, a state where the mold is open) and the movable platen 23 is not moving and is stopped. That is, a voltage drift is detectable if the movable platen 23 is stopped at a position where the tie bars 22 are in an unloaded state.

As mentioned above, in the above-mentioned mold-clamping force detection method, when detecting a mold-clamping force based on the output from the strain detection apparatus, the output voltage value (a first output value) from the strain detection apparatus is detected when the mold-clamping apparatus is unloaded, and the output voltage value (a second output value) output from the strain detection apparatus when a mold-clamping force is generated by the mold-clamping apparatus is corrected based on the first output value, and the mold-clamping force is acquired based on the corrected second output value.

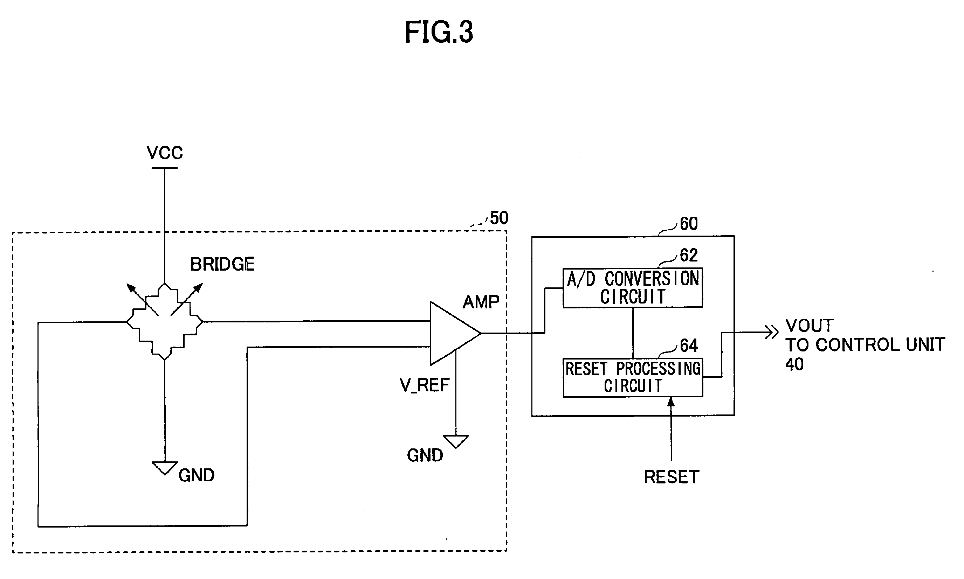

Next, a description will be given of the above-mentioned soft reset in more detail. FIG. 3 is a block circuit diagram of the strain detection apparatus 30 constituted to perform the software reset.

In FIG. 3, a strain gauge 50 has a well-known structure, and a description thereof will be omitted. In the present embodiment, an output voltage from the strain gauge 50 is supplied to a digital processing part 60. The digital processing part 60 converts the analog voltage signal from the strain gauge 50 into a digital voltage signal by an analog/digital conversion circuit 62.
The analog/digital conversion circuit 62 converts the output voltage of the strain gauge 50 into a digital value of 5000 when it is 0.5 volt and a digital value of 10000 when it is 1 volt.

The analog/digital conversion part 60 comprises a reset processing circuit 64 which performs a process of correcting the above-mentioned voltage drift shown in FIG. 2 (in this case, the soft reset). The reset processing circuit 64 performs the process in FIG. 2, when a reset signal RESET is input. For example, in the process of step S2, the output voltage at the maximum mold-open position is converted into a digital value by the analog/digital conversion part 62. If the output voltage (corresponding to a voltage drift) at the maximum mold-open position is 10 millivolts, the 10 millivolts is converted into a digital value 100. Then, the digital value 100 is memorized as the offset value in the above-mentioned step S4.

Therefore, when detecting a mold-clamping force at next time, the digital processing part 60 outputs a value, which is obtained by subtracting the offset value by the reset processing circuit 64, after converting the voltage actually output from the strain gauge 50 into a digital value by the reset processing circuit 64. For example, if the voltage actually output from the strain gauge 50 is 1.01 volt which contains 10 millivolts corresponding to the voltage drift, the voltage is converted into a digital value 10100 and thereafter the offset value 100 is subtracted and digital value of 10000 is output from the digital processing part 60. That is, the voltage drift=100 is subtracted, and a value corrected to a value close to the actual mold-clamping force is output, and, thus, the control unit 40 of the molding machine is capable of acquiring an actual mold-clamping force base on the corrected value.

It should be noted that the above-mentioned digital processing part 60 may be provided to the strain detection apparatus 30 or the control unit 40 of the molding machine.

Next, a description will be given of the above-mentioned hard reset in more detail.

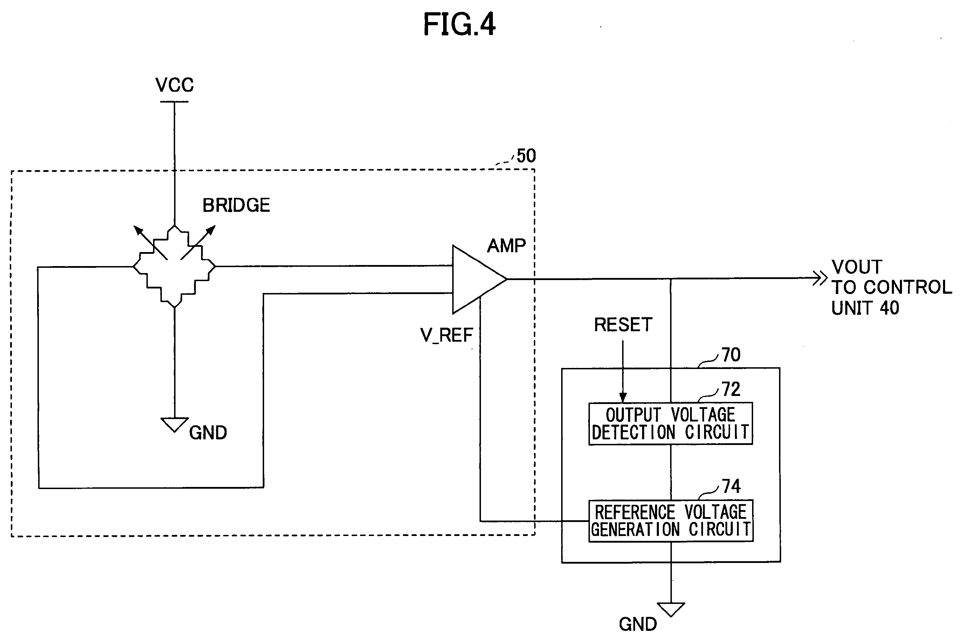

FIG. 4 is a block circuit diagram of the strain detection apparatus 30 constituted to perform the hard reset.

In FIG. 4, the strain gauge 50 has a well-known structure and a description thereof will be omitted. In the present embodiment, the output voltage from the strain gauge 50 is sent to the control unit 40 of the molding machine as a voltage signal as it is. The correction of a voltage drift is performed by a correction circuit 70. The correction circuit 70 comprises an output voltage detection circuit 72, which detects the output voltage from the strain gauge 50, and a reference voltage generation circuit 74, which generates a reference voltage V_REF supplied to an amplifier of the strain gauge. When a reset signal RESET is input to the output voltage detection circuit 72, the output voltage detection circuit 72 detects the output voltage from the strain gauge 50 and supplied the detected output voltage to the reference voltage generation circuit 74. This output voltage corresponds to the voltage drift. The reference voltage generation circuit 74 compares the supplied output voltage with a predetermined voltage and, if it is equal to or greater than the predetermined voltage, memorizes this voltage value as an offset value.

When detecting a mold-clamping force at a next time, the reference voltage generation circuit 74 generates a voltage equal to a difference between the memorized voltage value and 0 volt and supplies it to the amplifier of the strain gauge 50 as a reference voltage V_REF. Therefore, since the amplifier of the strain gauge 50 outputs a voltage based on the reference voltage of which part corresponding to a voltage drift is previously adjusted, the output voltage from the strain detection apparatus 30 is equal to the output voltage of which part corresponding to the voltage drift is corrected, and, if this output voltage is supplied to the control unit 40 of the molding machine as it is, the control unit 40 can acquire the actual mold-clamping force which does not contain the part corresponding to the drift voltage.

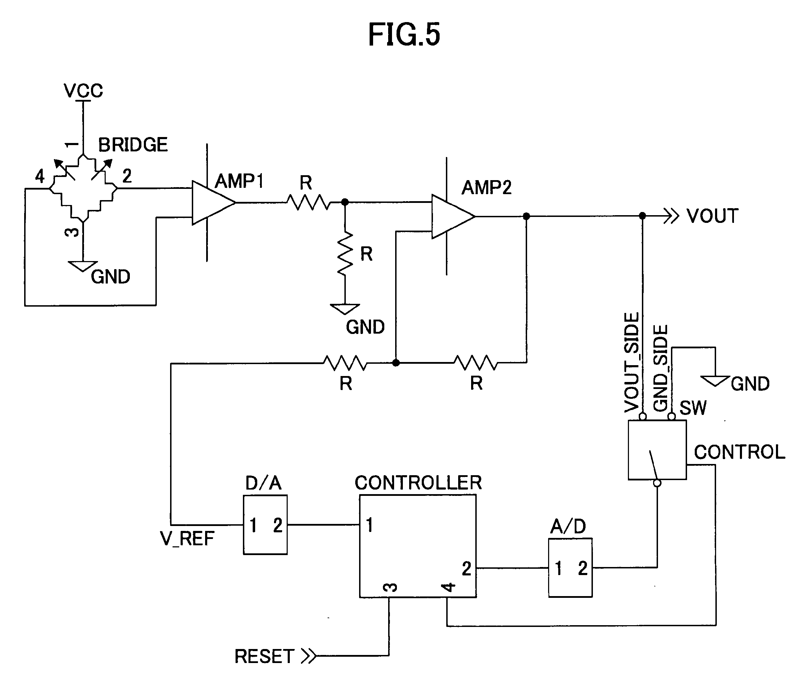

Here, an example of a circuit of performing the above-mentioned hard reset is given and explained. In the strain gage circuit, the output voltage of a bridge circuit BRIDGE is amplified by a comparison amplifier (differential amplifier) AMP as mentioned above so as to be a strain detection signal. Since the output voltage from the bridge circuit BRIDGE is small, it is necessary to set the amplification factor of the AMP, for example, 100 times. However, it is difficult for a single AMP to achieve 100 times, and, for example, it is necessary to make a structure to amplify by two stages as shown in FIG. 5.

FIG. 5 is a diagram showing a circuit structure in which a hard reset circuit according to the present invention is incorporated into an amplification circuit of a strain gauge. The amplification circuit of the strain gauge shown in FIG. 5 has a two-stage amplification structure having an AMP1 and an AMP2, and is configured to perform the above-mentioned hard reset with respect to the AMP2.

In FIG. 5, the output voltage from the bridge circuit BRIDGE is first amplified to some extent by the AMP1. Then, the output of the AMP1 is again amplified by the AMP2, and is made into the output signal (strain detection signal) VOUT from the strain gauge.

Here, an auto-zero part is connected to the output line of the AMP2 through a changeover switch SW. The auto-zero part is a circuit which performs the above-mentioned hard reset, and comprises an analog/digital converter A/D, a control element CONTROLLER and a digital/analog converter D/A. A reference voltage V_REF is output from the auto-zero part, and is supplied to the AMP2. This reference voltage V_REF serves as a correction signal for correcting a part corresponding to a voltage drift in the output voltage of the bridge circuit BRIDGE by the AMP2.

In an initial state in which a voltage drift is not generated in the output voltage of the bridge circuit BRIDGE, the changeover switch SW is connected to a grounding side so that the grounding potential is supplied to the auto-zero part and the grounding potential is set to the reference voltage V_REF of the AMP2 as it is and is supplied to the AMP2.

When a certain time has passed and reaches a time of performing the hard reset, a reset signal RESET is input to the control element CONTROLLER. Then, the control element CONTROLLER changes the changeover switch SW to the VOUT side. Thereby, the output voltage VOUT of the AMP2 is supplied to the auto-zero part.

The output voltage VOUT supplied to the auto-zero part is digital-converted by the analog/digital converter A/D so as to be a digital value and is supplied to the control element CONTROLLER. The control element CONTROLLER retains the digital value of the output voltage VOUT, and inputs the digital value to the digital/analog converter D/A. The digital/analog converter D/A converts the input digital value to an analog value. That is, the output voltage of the AMP2 input to the analog/digital converter A/D is reproduced. This reproduced voltage is the reference voltage V_REF, and is supplied to the reference voltage input terminal of the AMP2.

As mentioned above, if the reset signal RESET is input to the control element CONTROLLER, the output voltage from the AMP2 at that time is set as the reference voltage V_REF, and is supplied to the AMP2. The control element CONTROLLER retains the digital value of the reference voltage V_REF, and, thereafter, supplies the reference voltage V_REF to the AMP2 continuously.

Here, four tie bars 22 are provided in the mold-clamping apparatus shown in FIG. 1. If it is assumed that equal forces are exerted on the four tie bars 22 at the time mold-clamping, the mold-clamping force can be obtained by detecting a force applied to one of the tie bars 22 and quadrupling the detected value.

However, in an actual mold-clamping apparatus, there are many cases where a force is not equally applied to the four tie bars 22 due to influences of dimensional tolerance of each part and weight balance of each part. In such a case, it is possible that an accurate mold-clamping force cannot be obtained according to the method of calculating a mold-clamping force by quadrupling the detected value in one of the tie bars 22.

Thus, the detection error caused by variation between the tie bars 22 can be reduced or eliminated by attaching the strain detection apparatus 30 to each of a plurality of tie bars 22 and calculating a mold-clamping force base on a sum of outputs of the strain detection apparatuses 30.

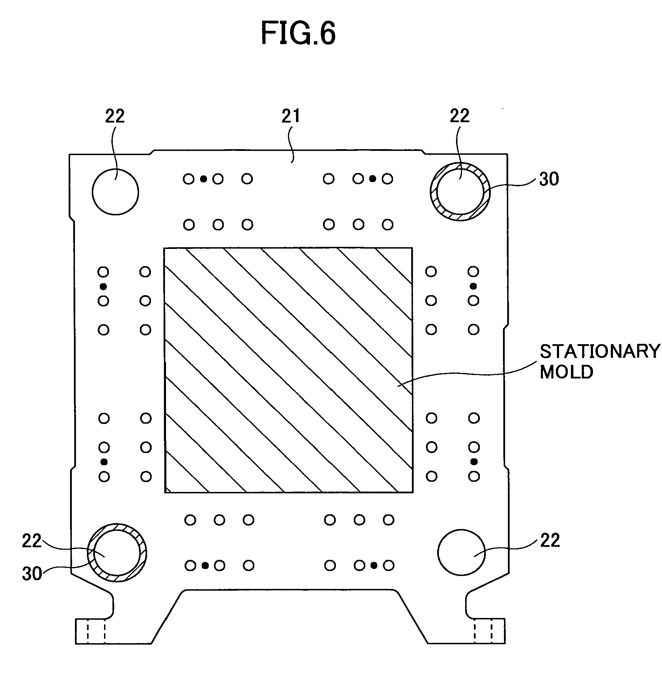

FIG. 6 is an illustration showing a case where the strain detection apparatus 30 is provided to each of two tie bars 22 on a diagonal line from among the four tie bars 22. It should be noted that FIG. 6 is an illustration of the stationary platen 21 viewed from the movable platen 23 side in FIG. 1, and each tie bar 22 is shown as a cross section. As mentioned above, a mold-clamping force can be calculated by acquiring forces applied to the two tie bars 22 on a diagonal line and doubling the sum of these. Considering variation between the upper side tie bars 22 and the lower side tie bars 22 and variation between the right side tie bars 22 and the left side tie bars 22 among the four tie bars 22, a mold-clamping force in which influences of the variations are reduced can be acquired efficiently by doubling the sum of forces applied to the two tie bars on a diagonal line.

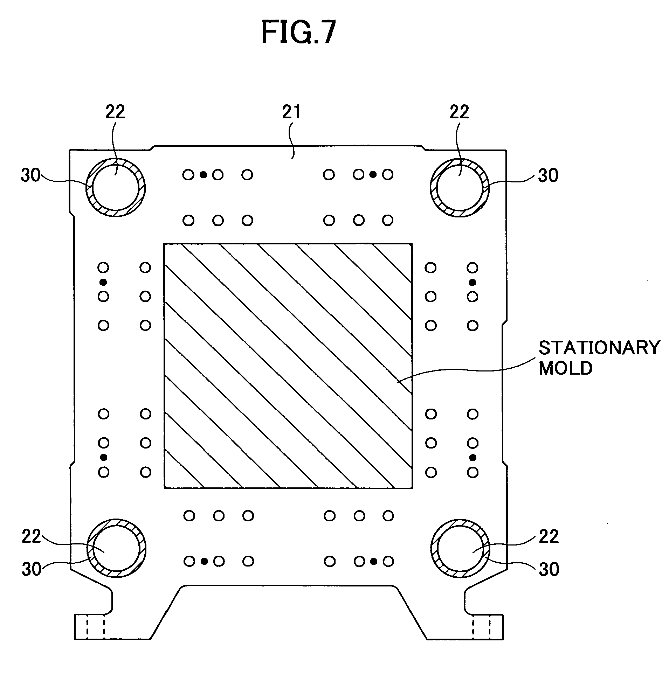

Moreover, FIG. 7 is an illustration showing a case where the strain detection apparatus 30 is provided to each of the four tie bars 22. In this manner, a mold-clamping force can be calculated by acquiring forces applied to all tie bars 22 and acquiring a sum of those. In such a case, variation between forces applied to the tie bars 22 does not give an influence to the acquired mold-clamping force, which can obtain an accurate mold-clamping force.

In order to sum the outputs from a plurality of strain detection apparatuses 30, an output sum may be acquired by inputting the outputs of amplifiers AMP1 through AMP4 of the strain detection apparatuses 30 and the output sum may be converted by an analog/digital converter A/D. In such a case the outputs from the plurality of strain detection apparatuses 30 are summed in the analog state, and the sum is converted into a digital signal.

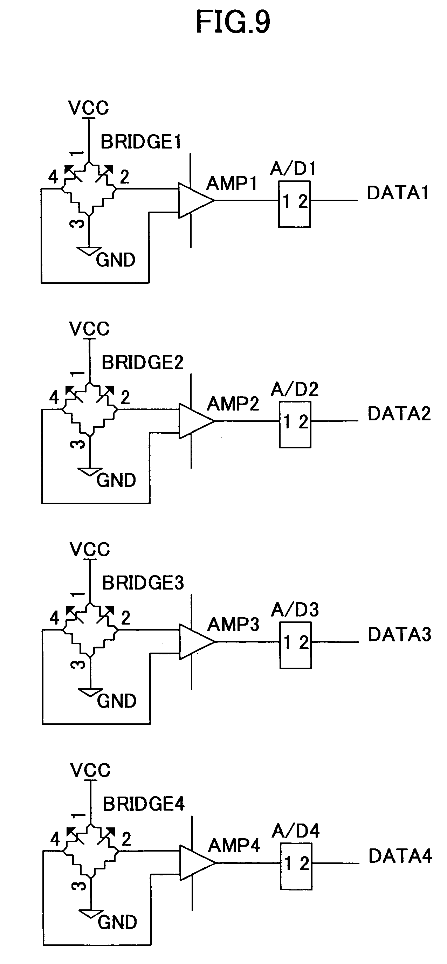

Or, as shown in FIG. 9, the outputs from the amplifiers AMP1 through AMP4 of the strain detection apparatuses 30 may be converted into digital values DATA1 through DATA4 by the analog/digital converter A/D individually so as to acquire a sum DATA of the acquired digital values (DATA=DATA1+DATA2+DATA3+DATA4). In this case, the outputs from the plurality of strain detection apparatuses 30 are converted into digital values individually, and the sum is calculated in digital values.

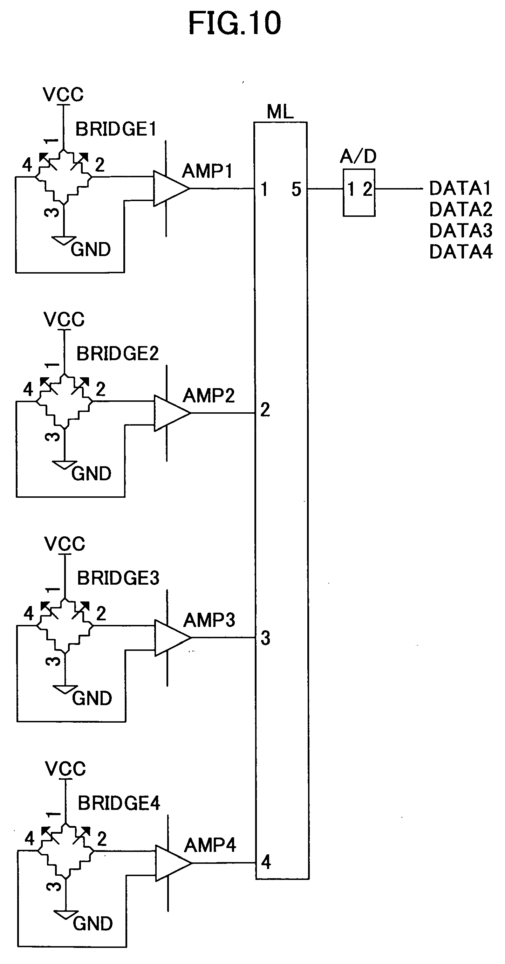

In the method shown in FIG. 9, it is necessary to provide the analog/digital converters A/D1 through A/D4 to the respective strain detection apparatuses 30 and the analog/digital converters of the same number as the number of the strain detection apparatuses 30 are required. Thus, as shown in FIG. 10, the outputs of all strain detection apparatuses 30 may be digital-converted by a single analog/digital converter A/D by using a multiplexer ML.

In FIG. 10, the multiplexer ML outputs the outputs from the strain detection apparatuses 30 by switching, for example, for every 1 millisecond. Therefore, the digital values DATA1 through DATA4, which are the outputs of the strain detection apparatuses 30 converted into analog values for every 1 millisecond. A sum DATA of the digital values DATA1 through DATA4 is acquired by a digital operation (DATA=DATA1+DATA2+DATA3+ DATA4).

However, if the outputs of the strain detection apparatuses 30 are switched, for example, for every 1 millisecond by the multiplexer ML, the DATA1 through DATA4 are detected values at times shifted by 1 millisecond from each other, and, thus, they are not detected values of a plurality of tie bars at the same time. Thus, it is necessary to correct the shift in the time of detection. For example, the sum DATA of the DATA1 through DATA4 is assumed to be obtained at a middle time of the times when the DATA1 through the DATA4 are obtained.

Specifically, if the DATA1 through DATA4 are output for every 1 millisecond, since it takes 3 milliseconds from the time when the DATA1 is obtained to the time when the DAAT4 is obtained, it is supposed that the sum DATA is obtained at a time, as a middle time, when 1.5 milliseconds has passed from the time when the ADTA1 was obtained. Or, it is supposed that the sum DATA is obtained at the time when the DATA1 is obtained so that the sum DATA may be obtained after subtracting a predetermined value from the values of DATA2 through DATA4.

As mentioned above, it is preferable to perform the correction process of the voltage drift such as shown in FIG. 3 or FIG. 5 on a mold-clamping force acquired from the outputs of the strain detection apparatuses 30 provided to the plurality of tie bars 22.

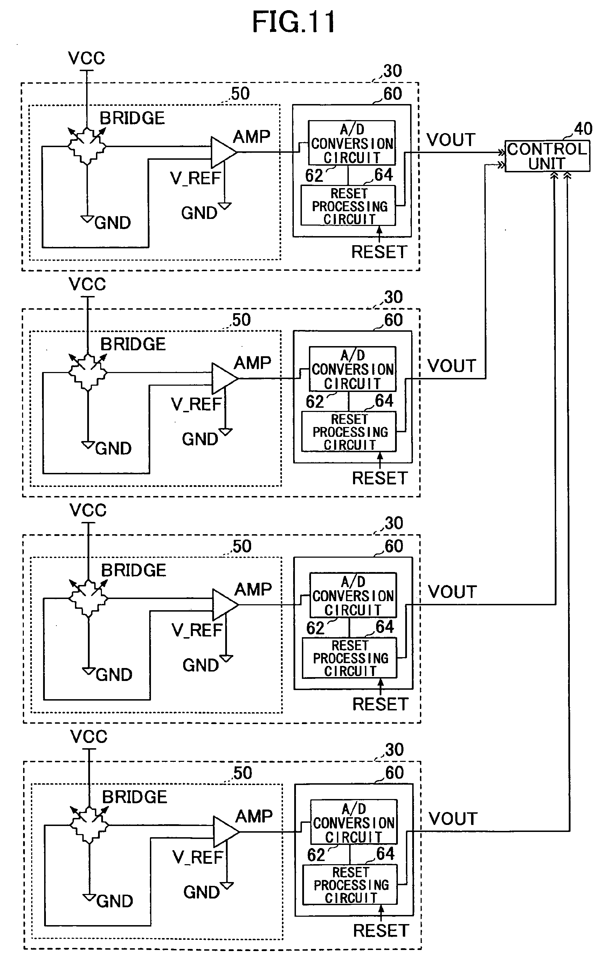

FIG. 11 is a block circuit diagram of an example in which the structure of the soft reset shown in FIG. 3 is applied to the structure in which the strain detection apparatus 30 is provided to each of the four tie bars. The output VOUT of a digital value output from the digital processing circuit 60 of each strain detection apparatus 30 is input to the control unit 40, and a mold-clamping force is acquired by operating a sum of those in the control unit 40. It should be noted that the control unit 40 operates the sum of the outputs of the four strain detection apparatuses 30 at the same time.

In the structure shown in FIG. 11, the correction of the voltage drift is performed in the same manner as the process shown in FIG. 2. That is, when it is determined that the movable platen is at the maximum mold-open position, the process of step S2 to S5 is performed in each strain detection apparatus 30 so as to perform a process of canceling a part corresponding to the voltage drift. The voltage drift is generated individually in each strain detection apparatus 30, and the same voltage drift does not always occur in all strain detection apparatuses 30. Accordingly, it is preferable to perform the correction of the voltage drift in each strain detection apparatus 30.

Moreover, the structure of the hard reset shown in FIG. 4 may be applied to the structure in which the strain detection apparatus 30 is provided to each of the four tie bars. This structure is the same as the structure shown in FIG. 11, and a description thereof will be omitted.

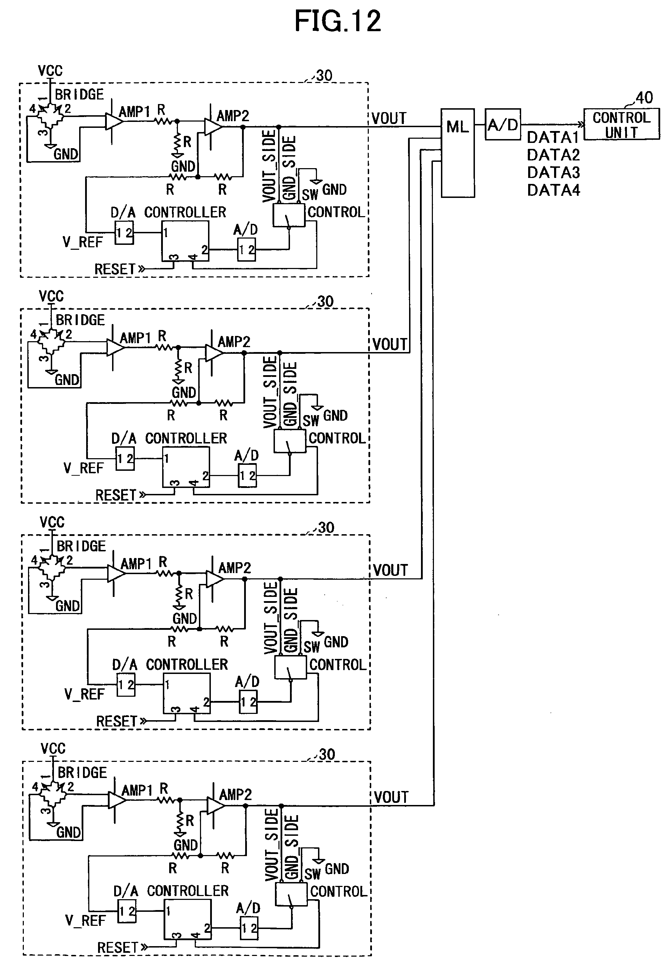

FIG. 12 is a block circuit diagram of an example in which the structure of the hard reset shown in FIG. 5 is applied to the structure in which the strain detection apparatus 30 is provided to each of the four tie bars. The output VOUT of an analog value output from the amplifier AMP2 of each strain detection apparatus 30 is supplied to the multiplexer ML. The multiplexer ML sequentially switches the outputs VOUT for every 1 millisecond, and outputs them to the analog/digital converter A/D. The analog/digital converter A/D changes the outputs VOUT supplied sequentially and supplies to the control unit 40. Similar to the example shown in FIG. 10, the control unit 40 acquires the sum DATA of the digital values DATA1 through DATA4 according to a digital operation (DATA=DATA1+DATA2+DATA3+ DATA4).

Also in the structure shown in FIG. 12, the correction of the voltage drift is performed in the same manner as the process shown in FIG. 2 in each strain detection apparatus 30.

Further, in the structure of hardware, an analog/digital converter A/D may by provided to each of the strain detection apparatuses 30 provided to the respective four tie bars. In this case, the digital value DATA output from each analog/digital converter A/D is input to the control unit 40.

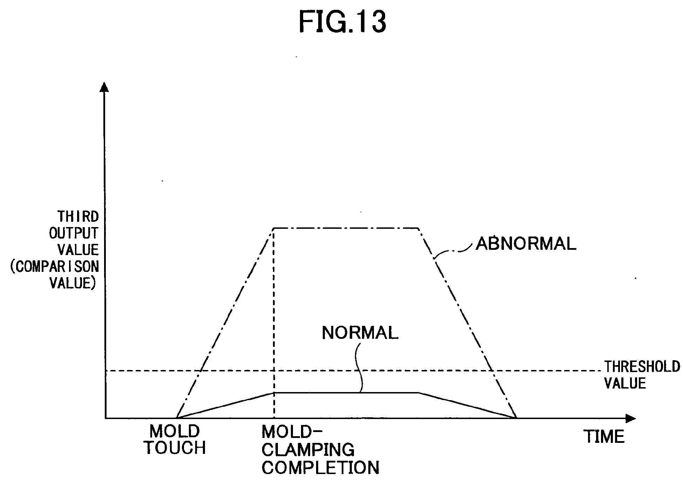

FIG. 13 is a diagram showing a difference, as a third detection value, between the detection values detected by two strain detection apparatuses 30 attached to the tie bars on a diagonal line as shown in FIG. 6. In the graph shown in FIG. 13, a solid line indicates the third output value, which is a difference between the detection values of the two strain detection apparatuses 30 when a mold-clamping force is applied to the tie bars in a normal state. In this case, the difference between the detection values is a small value, and variation between the tie bars is small, and it is judged that a mold-clamping force is applied to the mold in a well-balanced manner. On the other hand, in the graph of FIG. 13, a single-dashed chain line indicates the third output value when a mold-clamping force is applied in an abnormal state. Since the mold-clamping force starts to increase from a mold-touch position and the mold-clamping force becomes constant after the mold-clamping is completed, the third output value as a comparison value increases from the mold-touch position and becomes constant after the completion of the mold-clamping. However, unless the mold-clamping force is applied to the mold in a well-balanced manner, the third detection valued is a very large value as compared to that of the normal state. In this case, it can be judged that the mold-clamping apparatus is in an abnormal state, such as a bad attachment state of the mold or breakage of a tie bar. Further, by providing a threshold value for abnormal detection, if the third output value exceeds the threshold value, it can be judged that an abnormality occurs and the operation of the mold-clamping apparatus may be stopped or an operator is caused to recognize a failure earlier by announcing generation of an abnormality to the operator by generation of an abnormality alarm.

Thus, by comparing the detection values of the strain detection apparatuses, variation in the mold-clamping force applied to each tie bar can be grasped so that a state monitor of the mold-clamping apparatus such as an attachment state of the mold can be performed. Further, in order to perform the state monitor with more accuracy, the strain detection apparatus 30 may be provided to not two but all the tie bars. Further, a more accurate judgment can be made by using an integral value.

As explained above, by acquiring a mold-clamping force based on the sum of the output values obtained by the strain detection apparatuses separately provided to the plurality of tie bars, influences of variation in the forces applied to the tie bars can be reduced or eliminated, which achieves the mold-clamping detection force detection with high accuracy. Additionally, by performing the correction of the drift voltage on each of the plurality of strain detection apparatuses, the mold-clamping force detection with a higher accuracy can be achieved.

The present invention is not limited to the specifically disclosed embodiments, and various variations and modifications may be made without departing from the scope of the present invention.

The present application is base on Japanese priority patent application No. 2005-180999 filed June 21, 2005 and Japanese priority patent application No. 2006-014312 filed January 23, 2006.

### INDUSTRIAL APPLICABILITY

The present invention is applicable to a molding machine that detects a mold-clamping force by using a stain gauge for measuring a strain of a tie bar of a mold-clamping apparatus.

## Claims

1. A mold-clamping force detection method for detecting a mold-clamping force based on an output from at least one strain detection apparatus (30) provided to a mold-clamping apparatus (20) of a molding machine, comprising:
detecting a first output value output from the strain detection apparatus (30) when the mold-clamping apparatus (20) is unloaded;
correcting a second output value output from said strain detection apparatus (30) based on said first output value when a mold-clamping force is generated by said mold-clamping apparatus (20); and
acquiring the mold-clamping force based on the corrected second output value;
**characterized in that**
said strain detection apparatus (30) comprises a strain gauge (50), and
the correction of said second output value is performed by changing a reference voltage supplied to a comparison amplifier circuit of the strain gauge (50) based on said first output value.

2. The mold-clamping force detection method as claimed in claim 1, wherein a plurality of the strain detection apparatuses (30) are provided to the mold-clamping force of the molding machine, and acquiring said second output value from said first output value output from each of the strain detection apparatuses (30), and acquiring the mold-clamping force based on a sum of said second output values.

3. The mold-clamping force detection method as claimed in claim 1 or 2, wherein said first output value is detected when said mold-clamping apparatus (20) is in a maximum mold-open state.

4. The mold-clamping force detection method as claimed in claim 1 or 2, wherein the correction of said output value is performed using a digital value which is an output from said strain detection apparatus (30) being converted into a digital value.

5. The mold-clamping force detection method as claimed in claim 1, wherein an output voltage of said comparison amplifier circuit is converted into a digital value and retained so as to generate said reference voltage by converting the digital value into an analog value.

6. The mold-clamping force detection method as claimed in claim 5, wherein said comparison amplifier circuit includes at least two comparison amplifiers connected in series.

7. The mold-clamping force detection method as claimed in claim 2, wherein a comparison is made between output values based on at least two of said strain detection apparatuses (30) so as to determine an abnormality when a result of the comparison is greater than a predetermined value.

## Patentansprüche

1. Formklemmkraftdetektionsverfahren zum Detektieren einer Formklemmkraft basierend auf einer Ausgabe von zumindest einer Dehnungsdetektionsvorrichtung (30), die an einer Formklemmvorrichtung (20) einer Formmaschine vorgesehen ist, das Folgendes aufweist:
Detektieren eines ersten Ausgabewerts, der von der Dehnungsdetektionsvorrichtung (30) ausgegeben wird, wenn die Formklemmvorrichtung (20) unbelastet ist;
Korrigieren eines zweiten Ausgabewerts, der von der Dehnungsdetektionsvorrichtung (30) ausgegeben wird, und zwar basierend auf dem ersten Ausgabewert, wenn eine Formklemmkraft durch die Formklemmvorrichtung (20) erzeugt wird; und
Erfassen der Formklemmkraft basierend auf dem korrigierten, zweiten Ausgabewert;
**dadurch gekennzeichnet, dass**
die Dehnungsdetektionsvorrichtung (30) einen Dehnungsmesser (50) aufweist, und
die Korrektur des zweiten Ausgabewerts basierend auf dem ersten Ausgabewert ausgeführt wird, durch Verändern einer Referenzspannung, die an eine Vergleichsverstärkungsschaltung des Dehnungsmessers (50) geliefert wird.

2. Formklemmkraftdetektionsverfahren gemäß Anspruch 1, wobei eine Vielzahl von Dehnungsdetektionsvorrichtungen (30) für die Formklemmkraft der Formmaschine vorgesehen ist, die den zweiten Ausgabewert aus dem ersten Ausgabewert erfassen bzw. ermitteln, der von jeder der Dehnungsdetektionsvorrichtungen (30) ausgegeben wird, und die Formklemmkraft basierend auf einer Summe der zweiten Ausgabewerte ermitteln.

3. Formklemmkraftdetektionsverfahren gemäß Anspruch 1 oder 2, wobei der erste Ausgabewert detektiert wird, wenn sich die Formklemmvorrichtung (20) in einem maximalen Formöffnungszustand befindet.

4. Formklemmkraftdetektionsverfahren gemäß Anspruch 1 oder 2, wobei die Korrektur des Ausgabewerts unter Verwendung eines digitalen Werts ausgeführt wird, der eine Ausgabe von der Dehnungsdetektionsvorrichtung (30) ist, die in einen digitalen Wert umgewandelt wird.

5. Formklemmkraftdetektionsverfahren gemäß Anspruch 1, wobei eine Ausgabespannung der Vergleichsverstärkerschaltung in einen digitalen Wert umgewandelt wird, und gehalten wird, um die Referenzspannung zu erzeugen, und zwar durch Umwandeln des digitalen Werts in einen analogen Wert.

6. Formklemmkraftdetektionsverfahren gemäß Anspruch 5, wobei die Vergleichsverstärkerschaltung zumindest zwei Vergleichsverstärker, die in Reihe verbunden sind, aufweist.

7. Formklemmkraftdetektionsverfahren gemäß Anspruch 2, wobei ein Vergleich zwischen Ausgabewerten vorgenommen wird, und zwar basierend auf zumindest zwei der Dehnungsdetektionsvorrichtungen (30), um eine Abnormalität zu bestimmen, wenn ein Ergebnis des Vergleichs größer als ein vorbestimmter Wert ist.

## Revendications

1. Procédé de détection de force de serrage de moule pour détecter une force de serrage de moule sur la base de la sortie d'au moins un dispositif de détection de contrainte (30) prévu sur un dispositif de serrage de moule (20) d'une machine de moulage, comprenant :
détecter une première valeur de sortie fournie par le dispositif de détection de contrainte (30) lorsque le dispositif de serrage de moule (20) n'est pas chargé ;
corriger une deuxième valeur de sortie fournie par le dispositif de détection de contrainte (30) sur la base de la première valeur de sortie lorsqu'une force de serrage de moule est générée par le dispositif de serrage de moule (20) ; et
acquérir la force de serrage de moule sur la base de la deuxième valeur de sortie corrigée ;
**caractérisé en ce que**
le dispositif de détection de contrainte (30) comprend une jauge de contrainte (50), et
la correction de la deuxième valeur de sortie est réalisée en changeant une tension de référence fournie à un circuit amplificateur de comparaison de la jauge de contrainte (50) sur la base de la première valeur de sortie.

2. Procédé de détection de force de serrage de moule selon la revendication 1, dans lequel une pluralité de dispositifs de détection de contrainte (30) est prévue pour la force de serrage de moule de la machine de moulage, et on acquiert la deuxième valeur de sortie à partir de la première valeur de sortie produite par chacun des dispositifs de détection de contrainte (30), et on acquiert la force de serrage de moule sur la base d'une somme des deuxièmes valeurs de sortie.

3. Procédé de détection de force de serrage de moule selon la revendication 1 ou 2, dans lequel la première valeur de sortie est détectée lorsque le dispositif de serrage de moule (20) est dans un état d'ouverture de moule maximum.

4. Procédé de détection de force de serrage de moule selon la revendication 1 ou 2, dans lequel la correction de la valeur de sortie est réalisée en utilisant une valeur numérique qui est fournie par le dispositif de détection de contrainte (30) et convertie en une valeur numérique.

5. Procédé de détection de force de serrage de moule selon la revendication 1, dans lequel une tension de sortie du circuit amplificateur de comparaison est convertie en une valeur numérique et retenue de manière à générer la tension de référence en convertissant la valeur numérique en une valeur analogique.

6. Procédé de détection de force de serrage de moule selon la revendication 5, dans lequel le circuit amplificateur de comparaison comprend au moins deux amplificateurs de comparaison connectés en série.

7. Procédé de détection de force de serrage de moule selon la revendication 2, dans lequel une comparaison est faite entre des valeurs de sortie basées sur au moins deux des dispositifs de détection de contrainte (30) de façon à déterminer une anomalie lorsque le résultat de la comparaison est supérieur à une valeur prédéterminée.
